# EUROPEAN PATENT APPLICATION

(11) **EP 1 048 194 A1**
(43) Date of publication of application: **02.11.2000**
(21) Application number: 00108692.5
(22) Date of filing: 21.04.2000
(51) Int. Cl.: A01B 59/00

(54) **Hook means**

(30) Priority: 27.04.1999 IT MO990082
(71) Applicant: Mac Power S.R.L, 41042 Spezzano di Fiorano Modenese (Modena) (IT)
(72) Inventor: Ravazzini, Osvaldo, 41042 Spezzano di Fiorano Modenese (IT)
(74) Representative: Luppi, Luigi

(57) **Abstract**

Hook means comprises a body (1) provided with a hollow (2) suitable to be coupled with a conjugate part (3) of an agricultural tool, a shutter (9) slidably inserted into said body (1) so as to partially occupy said hollow (2) with its first end portion (10) and having a second end portion (11) coupled with an actuating lever (5), said actuating lever (5) being held adjacent to said hook-shaped body by elastic means (18), stopping means (16) associated to said body (1) suitable to cooperate with said lever (5) when this lies close to said body (1).

## Description

It is known that the agricultural machines are provided with tree-points connections in order to connect tools thereto, these tools are employed for example for working country terrain, such connections being constituted by two lower connections and a third upper connection, whose mutual positions and lay-out are of standard type.

These connections are modelled so as to therein accommodate conjugate parts with which the agricultural tools are provided.

These connections must keep the tool firmly secured in operating condition, must be disengaged from the conjugate parts of the tool when their disengagement is required, but they must have no opportunity to accidentally disengage during the working operations.

Since at least 1989, it is known a hook for third upper point of such connections, comprising a hook-shaped body having a hollow portion wherein a first end of a shutter is axially movable that can be engaged, when the shutter lies in its closing position, against the conjugate surface of a tool so as to block it in its working operative position.

The shutter is furthermore provided with a second end, to which a lever, actuatable by the operator, is hinged through a hinge pin; the lever is also hinged to the hook-shaped body in order to move the shutter from the closing position to an opening position, wherein it is pulled out of the hollow of the hook-shaped body, releasing the conjugate portion of the tool. The lever is provided with an L-shaped slit having a first branch disposed substantially parallel to the axis of the shutter when it lies in the closing position and a second branch, substantially perpendicular to the first branch.

The lay-out is such that, when the shutter lies in closing position, the hinge pin occupies the first branch of the L-shaped slit.

Therefore, possible loads that were accidentally transmitted to the shutter by the conjugate portion of the tool causing it to recede from the hollow and release the tool, are prevented by interference of the pin with the first branch of the L-shaped slit.

According to the Italian utility model patent n. 228875, the first branch of the L-shaped slit is provided with a small retaining groove in order to block the hinge pin in the closing position of the shutter.

In the above illustrated hook, in order to prevent the conjugate portion of the tool from overloading the shutter for causing it to further fall into the hollow, producing an anomalous stressing of a flat spring disposed between the lever and the hook-shaped body and acting so as to hold the lever close to the hook-shaped body, a transversal pin is provided secured to the shutter so as to release said stresses on the hook-shaped body.

The application of this transversal pin implies a remarkable increase of costs and assembling problems that produce waste of time.

Furthermore, it is required a quite meticulous manufacturing of the portions of the hook-shaped body that interact with the above-mentioned pin.

A purpose of the invention is to improve the existing connections, and more in particular to make more cost-effective these connections, with reference either to the manufacturing and to the assembly.

According to the invention, hook means is provided, comprising a hook-shaped body provided with a hollow suitable to be coupled with a conjugate portion of an agricultural tool, a shutter slidably inserted into said hook-shaped body so as to partially occupy said hollow with a first end portion thereof and having a second end portion coupled to an actuating lever, said actuating lever being held adjacent to said hook-shaped body by elastic means, stopping means suitable to cooperate with said lever when it lies close to said hook-shaped body, characterized in that, said stopping means is associated to said hook-shaped body.

In this way, the manufacturing of the connection results simplified, because for the manufacturing of the stopping means there is no need for machining to be performed onto the shutter.

The invention will be better understood and carried out with reference to the accompanying drawings, wherein:
Figure 1 is a side view of a hook for third upper point of an agricultural tractor, in opening position;
Figure 2 is a view like Figure 1, but in closing position.

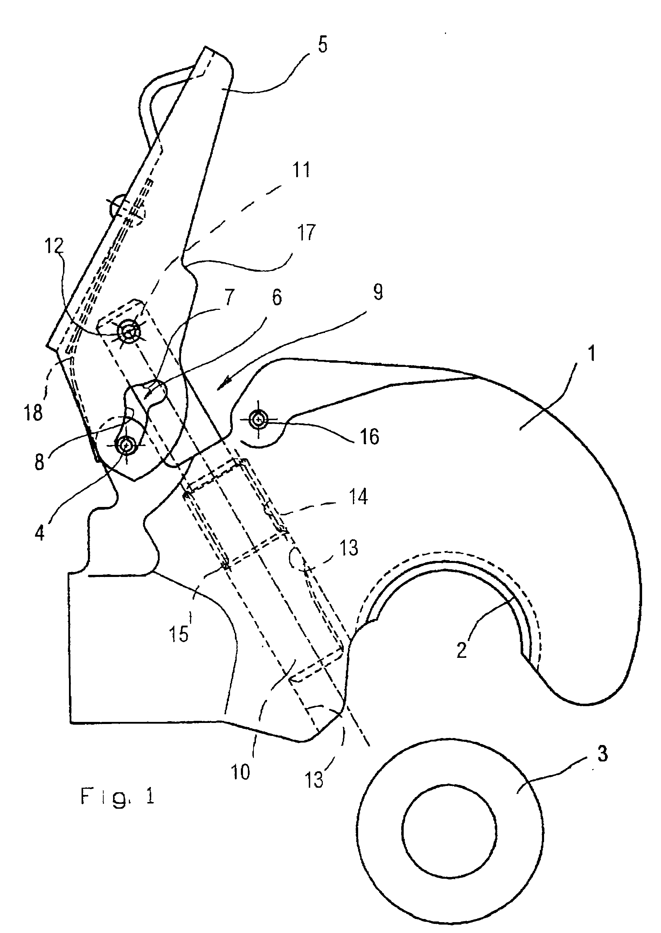

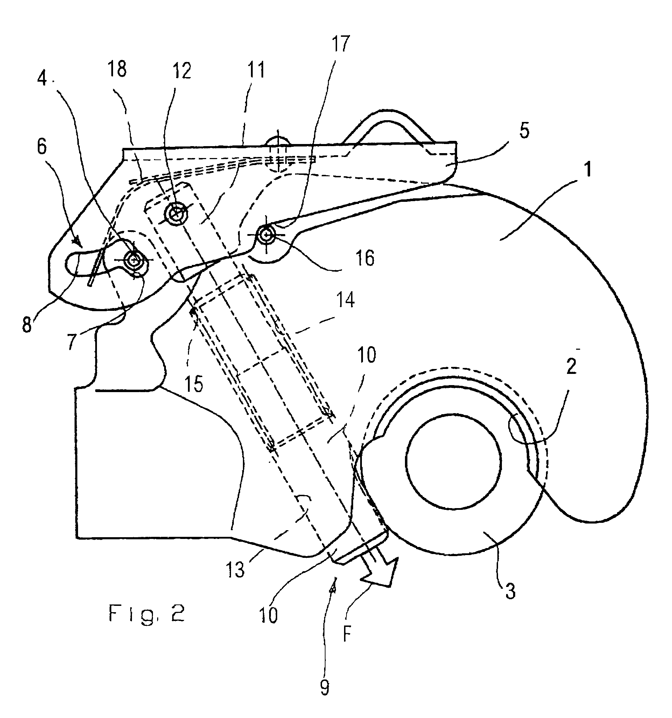

As shown in the Figures 1 and 2, a hook-shaped body 1 shows a hollow 2 suitable to shapingly receive a pivot 3 of an agricultural tool, not shown.

A hinge pin 4 is provided on the external portion of the body 1 to which a lever 5 is coupled in an oscillating way, moving between a closing position close to the body 1 and an opening position wherein the lever 5 lies remarkably separated from the body 1. A slit 6 is obtained into the body of the lever 5 at its coupling region with the pin 4. The slit 6 is modelled as an L shape and shows a first branch 7, lying - in the closing position of the lever 5 - substantially parallel to a shutter stem 9 and a second branch 8 perpendicular to the first branch 7 and suitable to allow the rotation of the lever 5 when this must be brought to the opening position.

The stem 9 shows a first end portion 10 suitable to partially occupy the hollow 2 in order to engage the pivot 3 and a second end portion pivotally coupled to the lever 5 through a moving pin 12.

The stem 9 is slidable into a bore 13 passing through the body 1 and is provided with a seat 14 for a recovery helical spring 15.

Onto the body 1 a transversal peg 16 is provided suitable to interfere with cooperating surfaces 17 of the lever 5 in order to prevent the lever 5 from approaching the body 1 beyond a pre-established limit, when the stem 9 is pressed along the direction of the arrow F. In this way, also the recovery spring 18 of the lever 5 is not stressed when forces directed along the direction shown by the arrow F are released onto the shutter.

The peg 16 is advantageously parallel to the pin 4, so as, while the manufacturing necessary for the positioning of the pin 4 is performed, also the manufacturing relative to the peg 16 can be carried out.

Furthermore, no type of machine tool working is required, either for the peg 16 or for the cooperating surfaces 17.

Obviously, according to a version not shown, instead of the peg 16, a conformation of regions of the body 1 can be provided corresponding to the conformation of the cooperating surfaces 17, in order to receive cooperating abutting surfaces. In this case it is furthermore necessary a tool machining of the body 1, that can take place when the body 1 is already prepared for the machining relative to the pin 4.

## Claims

1. Hook means, comprising a hook-shaped body (1) provided with a hollow (2) suitable to be coupled with a conjugate portion (3) of an agricultural tool, a shutter (9) slidably inserted into said hook-shaped body (1) so as to partially occupy said hollow (2) with a first end portion (10) thereof and having a second end portion (11) coupled to an actuating lever (5), said actuating lever (5) being held adjacent to said hook-shaped body by elastic means (18), stopping means (16) suitable to cooperate with said lever (5) when this lies close to said hook-shaped body (1), characterized in that said stopping means (16) is associated to said hook-shaped body (1).

2. Hook means according to claim 1, wherein said stopping means comprises cooperating surfaces (17) of said lever (5).

3. Hook means according to claim 2, wherein said stopping means further comprises appendices (16) sticking out of said hook-shaped body (1) and suitable to engage said cooperating surfaces (17).

4. Hook means according to claim 3, wherein said appendices are integral part of a peg (16) fixed in said hook-shaped body (1).

5. Hook means according to claim 2, wherein said stopping means comprises regions of the hook-shaped body (1) modelled so as to receive said cooperating abutting surfaces (17).
